# EUROPÄISCHE PATENTSCHRIFT

(11) **EP 3 820 246 B1**
(45) Veröffentlichungstag und Bekanntmachung des Hinweises auf die Patenterteilung: **15.05.2024**
(21) Anmeldenummer: 20204849.2
(22) Anmeldetag: 30.10.2020
(51) Int. Cl.: H05B 3/60, H05B 6/12

(54) **ELEKTRISCHE HEIZEINRICHTUNG, KOCHFELD UND VERFAHREN ZUM BETRIEB DER HEIZEINRICHTUNG**
ELECTRIC HEATING DEVICE, HOB AND METHOD FOR OPERATING THE HEATING DEVICE
DISPOSITIF DE CHAUFFAGE ÉLECTRIQUE, PLAQUE DE CUISSON ET PROCÉDÉ DE FONCTIONNEMENT DU DISPOSITIF DE CHAUFFAGE

(30) Priorität: 06.11.2019 DE 102019217088
(43) Veröffentlichungstag der Anmeldung: 12.05.2021
(73) Patentinhaber: E.G.O. Elektro-Gerätebau GmbH, 75038 Oberderdingen (DE)
(72) Erfinder: Mangler, Matthias, 76307 Karlsbad (DE); Riffel, Michael, 75038 Oberderdingen (DE); Schaumann, Uwe, 75038 Oberderdingen (DE); Seidler, Christian, 75015 Bretten (DE); Tafferner, Michael, 76316 Malsch (DE); Gedrat, Sven, 75038 Oberderdingen (DE)
(74) Vertreter: Patentanwälte Ruff, Wilhelm, Beier, Dauster & Partner mbB

(56) Entgegenhaltungen:
- EP-A1- 3 454 626
- DE-A1- 10 004 177
- FR-A- 867 678

## Beschreibung

### Anwendungsgebiet und Stand der Technik

Die Erfindung betrifft eine elektrische Heizeinrichtung, ein Kochfeld mit einer solchen Heizeinrichtung und ein Verfahren zum Betrieb einer solchen Heizeinrichtung.

Aus dem Stand der Technik sind Kochfelder mit Heizeinrichtungen unter einer Kochfeldplatte bekannt, bei denen die Heizeinrichtung insgesamt an unterschiedliche Stellen bzw. um eine bestimmte Strecke bewegt werden kann, siehe hierzu beispielsweise die DE 10 2016 218 269 A1. Des Weiteren ist aus der DE 10 2018 220 968 A1 eine Induktionsheizeinrichtung bekannt, die eine formveränderbare Induktionsspule aufweist. Sie kann an Form und/oder Größe eines darüber aufgestellten Kochgefäßes angepasst werden. Gegebenenfalls kann die Induktionsspule auch mit ihrem Heizbereich ein Stück bewegt werden, insbesondere zur Anpassung an ein möglicherweise nicht exakt zentrisch dazu aufgesetztes Kochgefäß.

Aus der EP 3 454 626 A1 ist eine Heizeinrichtung bekannt mit mehreren einzelnen bzw. vereinzelten Heizelementen in einem durch feste Begrenzungen gebildeten Heizbereich. An zwei gegenüberliegenden Seiten sind bewegbare Begrenzungen vorgesehen, die gleichzeitig elektrische Anschlusskontakte an die elektrisch leitfähigen Heizelemente bilden. Durch die Bewegbarkeit dieser beiden Begrenzungen kann ein thermisch bedingtes verstärktes Ausdehnen der Heizelemente im Heizbetrieb ausgeglichen werden. Des Weiteren bestehen die elektrisch leitfähigen Heizelemente aus Siliziumpulver einerseits und Carbonpulver andererseits mit variierenden Durchmessern im Bereich zwischen 5 µm und 150 µm, sie sind also tatsächlich pulverförmig.

Aus der FR 867678 A ist eine elektrische Heizeinrichtung bekannt mit Heizelementen, die in einem Heizbereich enthalten sind, wobei dieHeizelementen ebenfalls pulverförmig sind bzw. als Granulat ausgebildet sind. Sie sind in einer festen Begrenzung gehalten und mittels eingebrachter Elektroden elektrisch kontaktiert.

Aus der DE 10004177 A1 ist eine elektrische Heizeinrichtung bekannt mit einem länglichen stabförmigen Heizelement, das porös bzw. aufgeschäumt ist. Dadurch weist es eine stark vergrößerte Oberfläche auf für eine verbesserte Abstrahlung der erzeugten Wärme. Dieses Heizelement verläuft weitgehend frei und ist an seinen Enden in thermisch beständigem Material gehaltert.

### Aufgabe und Lösung

Der Erfindung liegt die Aufgabe zugrunde, eine eingangs genannte Heizeinrichtung, ein Kochfeld mit einer solchen Heizeinrichtung sowie ein Verfahren zum Betrieb einer solchen Heizeinrichtung zu schaffen, mit denen Probleme des Standes der Technik gelöst werden können und es insbesondere möglich ist, eine Heizeinrichtung praxistauglich, vielseitig und zuverlässig beeinflussen zu können, insbesondere hinsichtlich ihrer Form und/oder ihrer Leistung.

Gelöst wird diese Aufgabe durch eine Heizeinrichtung mit den Merkmalen des Anspruchs 1, durch ein Kochfeld mit den Merkmalen des Anspruchs 11 sowie durch ein Verfahren mit den Merkmalen des Anspruchs 13. Vorteilhafte sowie bevorzugte Ausgestaltungen der Erfindung sind in den weiteren Ansprüchen enthalten und werden im Folgenden näher erläutert. Dabei werden manche der Merkmale nur für die Heizeinrichtung, nur für das Kochfeld oder nur für das Verfahren beschrieben. Sie sollen jedoch unabhängig davon sowohl für die Heizeinrichtung als auch für das Kochfeld und für das Verfahren selbstständig und unabhängig voneinander gelten können.

Es ist vorgesehen, dass die elektrische Heizeinrichtung mindestens drei Heizelemente aufweist, die vereinzelbar sind bzw. die separat ausgebildet sind, wobei sie in der Heizeinrichtung gemeinsam angeordnet sind. Dies bedeutet, dass sie gemeinsam heizen und sich auch berühren. Die Heizelemente bestehen aus elektrisch leitfähigem Material mit einer elektrisch leitfähigen Oberfläche, möglicherweise auch im Kern elektrisch leitfähig. Eine Temperaturbeständigkeit dieser Oberfläche bzw. des elektrisch leitfähigen Materials, vorzugsweise des gesamten Heizelements, sollte größer als 200°C sein, vorzugsweise größer als 1.000°C oder sogar 1.200°C. Somit kann eine Heizfunktion auch für brauchbare hohe Temperaturen erhalten werden, beispielsweise um in einem Kochfeld eine Warmhaltefunktion, aber auch eine Kochfunktion oder Bratfunktion zu bewirken.

Die Heizeinrichtung weist mindestens einen Heizbereich auf, in dem die vorgenannten Heizelemente derart angeordnet sind, dass sie einander berühren. Dabei müssen sich nicht alle Heizelemente jeweils berühren, jedes Heizelement muss aber mindestens ein weiteres Heizelement berühren. Vorzugsweise berühren alle Heizelemente mindestens zwei oder drei weitere Heizelemente. Die Anzahl der Heizelemente kann deutlich mehr als drei betragen, vorteilhaft sind 5 Heizelemente bis 100 Heizelemente vorhanden.

Des Weiteren weist die elektrische Heizeinrichtung mindestens zwei Anschlusskontakte auf, um die Heizelemente, insbesondere alle Heizelemente in dem Heizbereich, an eine Leistungsversorgung anzuschließen. Es können auch mehr als zwei Anschlusskontakte vorgesehen sein, beispielsweise drei oder vier Anschlusskontakte.

Es ist vorgesehen, dass an jedem Anschlusskontakt mindestens ein Heizelement anliegt. Vorteilhaft sind es pro Anschlusskontakt mehrere Heizelemente, beispielsweise zwei bis fünf Heizelemente. Die Anschlusskontakte sind vorteilhaft mitten im Heizbereich oder am Rand des Heizbereichs angeordnet. So ist mindestens ein Anschlusskontakt am Randbereich des Heizbereichs angeordnet bzw. bildet einen solchen Rand, beispielsweise als eine Art Begrenzung für den Heizbereich. Ein weiterer Anschlusskontakt kann einerseits inmitten der Heizelemente liegen, so dass ein Strompfad nicht von einem Anschlusskontakt bis quer über den Heizbereich zu einem anderen Anschlusskontakt verlaufen muss, sondern kürzer sein kann. In Ausgestaltung der Erfindung ist es auch möglich, dass ein Anschlusskontakt unter den Heizelementen liegt bzw. an einer Auflagefläche für die Heizelemente vorgesehen ist, vorteilhaft mittig und mit relativ kleiner Erstreckung. Andererseits können alle Anschlusskontakte am Rand liegen wie vorbeschrieben.

Die Heizelemente bilden mindestens eine elektrisch leitfähige Verbindung zwischen den Anschlusskontakten. Vorteilhaft gibt es mehrere solcher Strompfade von Anschlusskontakt zu Anschlusskontakt über mehrere Heizelemente hinweg, so dass eine flächig verteilte Heizwirkung entsprechend mehreren flächig verteilten Strompfaden vorgesehen ist, so dass die Heizeinrichtung einen flächig wirkenden bzw. heizenden Heizbereich aufweist. Diese Heizwirkung entsteht dadurch, dass sich bei Anlegen einer Spannung an die Anschlusskontakte ein Stromfluss durch die Heizelemente hindurch ergibt, der zu einer Heizwirkung führt. Eine solche Heizwirkung ist zumindest an jedem Berührbereich eines Heizelements zu einem Anschlusskontakt hin oder zu einem anderen Heizelement hin gegeben. Vorteilhaft entsteht an allen diesen Berührbereichen eine Heizwirkung.

Somit ist es mit der Erfindung möglich, dass eine Heizwirkung durch die Vielzahl von Berührbereichen flächig verteilt ist, insbesondere über den gesamten Heizbereich. Eine flächige Verteilung kann möglichst gleichmäßig bzw. homogen sein, muss dies aber nicht zwingend vollständig sein.

In Ausgestaltung der Erfindung kann der Heizbereich eine geometrische Grundform aufweisen, vorteilhaft einerseits kreisrund sein und andererseits rechteckig sein. Er könnte noch, beispielsweise zur Anpassung an einen sogenannten Bräter, der auf einem Kochfeld beheizt werden kann, länglich oval ausgebildet sein. Möglicherweise können gerade bei diesen einfachen geometrischen Grundformen mehrere Heizeinrichtungen nebeneinander angeordnet und gemeinsam betrieben werden, um eine große Heizfläche zu schaffen für ein großes Kochgefäß.

Bei der Erfindung sind alle Heizelemente der Heizeinrichtung identisch. Dies erleichtert ihre Herstellung und den Aufbau der Heizeinrichtung, da nicht auf unterschiedliche Heizelemente geachtet werden muss. So können auch in einem gesamten Kochfeld alle Heizelemente aller Heizeinrichtungen identisch ausgebildet sein.

Sind die Heizelemente scheibenförmig, so ist ein maximaler Durchmesser der Heizelemente vorteilhaft zweimal bis zehnmal so groß wie ihre Dicke bzw. Höhe. Bevorzugt sind es runde bzw. kreisrunde Scheiben, alternativ mehreckige Scheiben mit mindestens fünf Ecken oder sechs bis acht Ecken, also einer Art Wabenform.

In alternativer Ausgestaltung der Erfindung sind die Heizelemente als sphärische Körper ausgebildet. Besonders vorzugsweise sind es runde Körper bzw. kugelrunde Körper. Dann unterscheiden sich die vorgenannten Größen ausschließlich hinsichtlich ihres Radius. Es können aber auch sozusagen polygone sphärische Körper vorgesehen sein, möglicherweise ähnlich einem Fußball mit einer Außenfläche, die von einzelnen planen oder leicht gewölbten Fünfecken und/oder Sechsecken gebildet ist, um insgesamt eine geschlossene Oberfläche zu erreichen.

Bevorzugt ist es auf alle Fälle, wenn die Heizelemente regelmäßig ausgebildete Körper sind. Dann ist ein Aufbau der Heizeinrichtung auch leichter möglich, ohne dass auf die exakte Lage jedes einzelnen Heizelements an sich und relativ zu benachbarten Heizelementen Rücksicht genommen werden muss.

Bezüglich einer Größe der Heizelemente ist erfindungsgemäß vorgesehen, dass ein maximaler Durchmesser 3 mm bis 20 mm beträgt. Vorteilhaft kann er 4 mm bis 10 mm betragen. Für eine Verwendung in einem Kochfeld, bei der eine Heizeinrichtung bzw. der Durchmesser des Heizbereichs insgesamt zwischen 140 mm und 230 mm betragen kann, ergibt sich so eine sinnvolle Aufteilung in eine überschaubare Anzahl von Heizelementen. Gleichzeitig können sie einfacher exakt gefertigt werden, wenn sie nicht zu klein sind.

Es ist möglich, dass die Heizelemente als monolithische Körper ausgebildet sind und aus einem einzigen Material bestehen, vorteilhaft elektrisch leitfähigem Material, insbesondere aus einem Metall oder einer Graphit-Verbindung.

Alternativ können die Heizelemente einen elastischen bzw. formveränderlichen Kern aufweisen in ihrem Inneren, der dennoch relativ fest sein sollte. Dieser Kern kann von einer elektrisch leitfähigen Hülle umgeben sein, wobei eine Dicke der Hülle mindestens 1 mm betragen sollte bei vorgenannten Durchmessern für ein Heizelement. In nochmals weiterer Ausgestaltung der Erfindung kann vorgesehen sein, dass die Heizelemente hohl sind bzw. innen keinen Kern aufweisen, aber eine vorgenannte Hülle. Dann wird weniger Material benötigt, ihre Elastizität bzw. Formveränderlichkeit ist noch besser als mit einem Kern, und ihre thermische Masse für ein schnelles Aufheizen der Heizeinrichtung ist auch geringer. Möglicherweise kann anstelle einer elektrisch leitfähigen Hülle mit einer vorgenannten Dicke, die vollständig aus elektrisch leitfähigem bzw. Heizmaterial gefertigt ist, auch eine entsprechend elektrisch leitfähige Beschichtung vorgesehen sein. Diese kann dann dünner sein, beispielsweise 50 µm bis 200 µm dick sein.

In einer Ausgestaltung der Erfindung ist es möglich, dass die Heizelemente in einer einzigen Ebene angeordnet sind, vorteilhaft auf einem planen Träger oder auf einer planen Unterlage. Dann ist die Abstrahlung der Heizleistung in jedem einzelnen Berührbereich bzw. auch zumindest an den Oberseiten der Heizelemente nach oben, also zu einem aufgesetzten Kochgefäß im Kochfeld hin, maximal. Des Weiteren ist es aber auch möglich, die Heizelemente in mehreren Ebenen übereinander im Heizbereich anzuordnen, also sozusagen als Schichtung oder als Haufen. Dies können zwei Ebenen bis zehn Ebenen oder sogar bis zwanzig Ebenen sein, wobei eine Ebene im Wesentlichen einer Schicht bzw. einer Lage entspricht. In vorteilhafter Ausgestaltung der Erfindung sind mehr Heizelemente in einer Richtung von einem Anschlusskontakt zu einem anderen Anschlusskontakt hin angeordnet als in einer Richtung senkrecht zu den Ebenen bzw. senkrecht zu der genannten Richtung von Anschlusskontakt zu Anschlusskontakt. Dies bedeutet, dass ein minimaler Durchmesser der Heizeinrichtung größer sein sollte als ihre Dicke bzw. ihre Höhe. Bevorzugt sind in jeder Ebene bzw. Schicht oder Lage ähnlich viele oder sogar gleich viele Heizelemente angeordnet.

Sind die Heizelemente in mehreren Ebenen, Schichten oder Lagen übereinander angeordnet, so sollten sich die Anschlusskontakte ebenfalls über diese Höhe erstrecken. Vorteilhaft wird mindestens ein Heizelement von jeder Ebene oder Schicht bzw. Lage von einem Anschlusskontakt berührt und elektrisch kontaktiert, so dass ein elektrischer Anschluss sozusagen an jede Ebene direkt erfolgt.

In bevorzugter Ausgestaltung der Erfindung sind alle Heizelemente einer Heizeinrichtung in deren Betrieb stromdurchflossen, tragen also zur Heizwirkung bei. Eine Unterteilung wäre zwar denkbar, würde den Aufwand jedoch beträchtlich erhöhen und die Heizwirkung negativ beeinträchtigen.

Bei entsprechender Ausgestaltung der Heizelemente ist es möglich, dass in dem Fall, dass an den Anschlusskontakten Spannung angelegt wird, ein Strom durch die Heizelemente hindurchfließt und diese dann eine Heizwirkung aufweisen nicht nur an den Berührbereichen untereinander, sondern darüber hinaus. Vorteilhaft ist eine Heizwirkung vorgesehen an der gesamten Oberfläche der Heizelemente, so dass diese als eine Art Kugelstrahler mit dem größten Teil ihrer Oberfläche oder sogar ihrer gesamten Oberfläche Heizleistung abstrahlen können. Dann ergibt sich eine möglichst gut flächenverteilte bzw. flächig verteilte Erzeugung der Heizleistung der Heizeinrichtung.

Bei der Erfindung ist der Heizbereich mit Begrenzungen versehen, die also sozusagen die Heizelemente begrenzen und im Heizbereich halten. Mindestens eine der Begrenzungen ist bewegbar, insbesondere im Ganzen mit ihrer Form bewegbar oder formveränderlich und dadurch zumindest teilweise bewegbar. Eine Bewegbarkeit dieser mindestens einen Begrenzung ist in einer Richtung in den Heizbereich hinein vorgesehen, wodurch die Heizelemente im Heizbereich stärker zusammengedrückt werden können.

Des Weiteren ist es möglich, dass neben einer elastischen oder formveränderlich ausgebildeten Begrenzung auch mindestens eine Begrenzung starr ausgebildet ist, also weder formveränderlich noch bewegbar. Bevorzugt kann für die Erfindung vorgesehen sein, dass mindestens so viele Begrenzungen starr bzw. formunveränderlich ausgebildet sind wie elastische oder formveränderliche Begrenzungen vorgesehen sind. So kann es bereits ausreichen, wenn bei vier Begrenzungen der Heizeinrichtung insgesamt eine einzige bewegbar oder formveränderlich ausgebildet ist, um sich in den Heizbereich hineinzubewegen und die Heizelemente im Heizbereich stärker zusammenzudrücken. Durch dieses stärkere Zusammendrücken der Heizelemente vergrößern sich Berührflächen zwischen den einzelnen Heizelementen, unter Umständen ergeben sich auch mehr Berührflächen als vorher bezüglich ihrer Anzahl. Sowohl durch die höhere Anzahl von Berührflächen als auch durch die vergrößerten Berührflächen ergibt sich bei konstanter angelegter Spannung ein erhöhter Stromfluss in den Heizelementen, wodurch auch die erzeugte Heizleistung größer wird. Eine solche Vergrößerung der Berührflächen zwischen einzelnen Heizelementen muss nicht drastisch sein, kann sich aber bereits deutlich auswirken auch wenn sie nur im relativ geringen Bereich bleibt, beispielsweise 2% bis 10% oder bis 20%. Damit die Begrenzungen ihre Form verändern oder ihre Position verändern, können entsprechende Aktoren vorgesehen sein, beispielsweise Getriebemotoren oder pneumatische oder hydraulische Stellzylinder. Dies ist für den Fachmann aber leicht realisierbar.

Es kann in weiterer Ausgestaltung der Erfindung nicht nur vorgesehen sein, dass eine einzige Begrenzung einer Heizeinrichtung bewegt wird oder in ihrer Form verändert wird, um die Heizwirkung zu verändern, sondern dass sich mehrere Begrenzungen bewegen bzw. ein Großteil der Heizelemente bewegt wird, insbesondere alle Heizelemente bewegt werden. So kann es auch erreicht werden, dass durch Bewegen der Begrenzungen die davon umgebenen Heizelemente mitbewegt werden und somit eine bewegte Heizeinrichtung im Kochfeld geschaffen werden kann.

In einer Ausgestaltung der Erfindung ist vorgesehen, dass die Anschlusskontakte plan ausgebildet sind bzw. plane Flächen aufweisen. Dann können sie vorteilhaft Teil einer vorgenannten Begrenzung bilden, innerhalb derer der Heizbereich durch die Heizelemente gebildet ist.

Alternativ kann mindestens ein Anschlusskontakt gewölbt oder sphärisch sein. Seine Form kann einer Form der Heizelemente entsprechen oder genau dieselbe sein. Dadurch kann ein elektrischer Kontakt des Anschlusskontakts an ein oder mehrere Heizelemente möglichst gut erfolgen und bereits so ausgebildet sein, wie dann die elektrischen Kontakte zwischen den Heizelementen sind.

An einem Kochfeld kann eine Kochgefäßerkennung vorgesehen sein, die den Aufstellort eines Kochgefäßes auf der Kochfeldplatte erfasst. Dann kann durch entsprechende Steuerbefehle einer Steuerung veranlasst werden, dass die Heizeinrichtung oder zumindest eine Heizeinrichtung unter dieses Kochgefäß bewegt wird, möglicherweise auch in ihrer Form verändert wird, um das Kochgefäß optimal beheizen zu können.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf eine erste Ausgestaltung einer erfindungsgemäßen Heizeinrichtung mit einem runden Heizbereich, zwei Anschlusskontakten und darin angeordneten runden Heizelementen,
- Fig. 2: eine Seitenansicht der Heizeinrichtung aus Fig. 1 mit kugelförmigen Heizelementen in einer einzigen Ebene,
- Fig. 3: eine Seitenansicht auf eine abgewandelte Heizeinrichtung ähnlich Fig. 2 in einem erfindungsgemäßen Kochfeld mit scheibenförmigen Heizelementen in einer Ebene,
- Fig. 4: eine Seitenansicht einer weiteren erfindungsgemäßen Heizeinrichtung mit kugelförmigen Heizelementen in mehreren Ebenen übereinander in unregelmäßiger Anordnung,
- Fig. 5: eine Draufsicht ähnlich Fig. 1 auf eine weitere Ausgestaltung einer erfindungsgemäßen Heizeinrichtung, bei der eine Umrandung derart formveränderlich ist, dass ein Heizbereich mit den Heizelementen darin verkleinert werden kann,
- Fig. 6: links eine Darstellung einer Berührfläche zwischen zwei kugelförmigen Heizelementen mit normalem bzw. geringem Anpressdruck und rechts die Anordnung von links mit erhöhtem Anpressdruck und vergrößerter Berührfläche,
- Fig. 7: eine Draufsicht auf einen länglich-ovalen Bräter mit einer einzigen erfindungsgemäßen Heizeinrichtung darunter, die bewegbar ist,
- Fig. 8: eine Draufsicht auf eine erfindungsgemäße Kochfeld mit vier erfindungsgemäßen Heizeinrichtungen, wobei die vorderen beiden Heizeinrichtung in jeweils unterschiedlich bewegbar ausgebildet sind, und
- Fig. 9: eine Draufsicht ähnlich Fig. 1 auf eine weitere Ausgestaltung einer erfindungsgemäßen Heizeinrichtung mit rechteckiger Form und regelmäßiger Anordnung von runden Heizelementen.

### Detaillierte Beschreibung der Ausführungsbeispiele

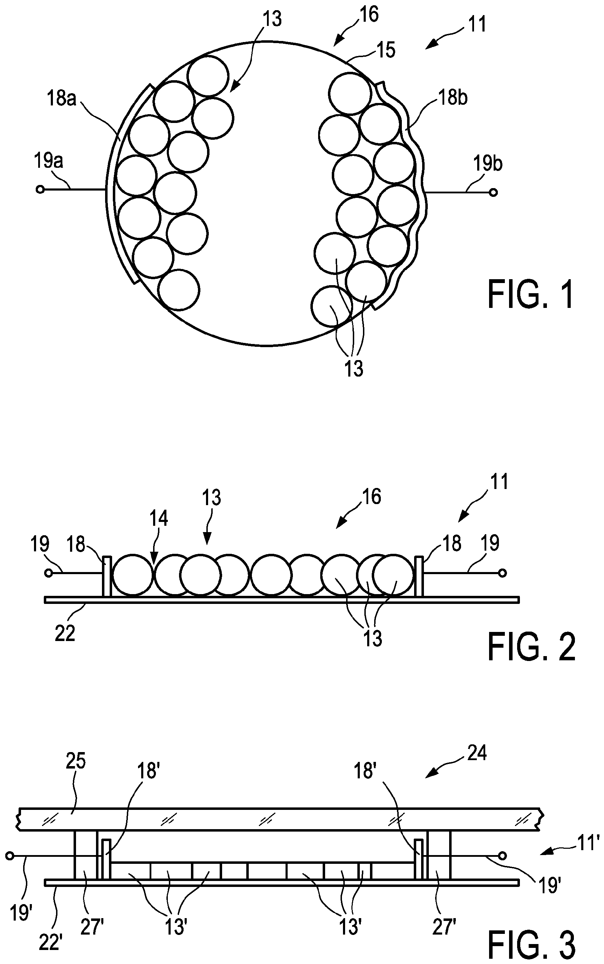

In Fig. 1 ist eine Draufsicht auf eine erfindungsgemäße Heizeinrichtung 11 zu sehen, wie sie insbesondere in einem Kochfeld eingebaut sein kann. Die Heizeinrichtung 11 weist eine Vielzahl von in Draufsicht runden Heizelementen 13 auf, die sich innerhalb einer hier runden Umrandung 15 befinden. Dabei liegen alle Heizelemente 13 an benachbarten Heizelementen 13 an. Die Heizelemente 13 füllen auch einen Mittelbereich, was hier nicht dargestellt ist. Somit bilden sie innerhalb der Umrandung 15 einen mit Heizelementen vollständig gefüllten Heizbereich 16. Aus der jeweiligen Darstellung ist zu ersehen, dass aufgrund der Anordnung der Menge der Heizelementen 13 manche Heizelemente zwar nahe zueinander verlaufen, sich aber nicht zwingend berühren.

Eine elektrische Kontaktierung an die Heizelemente 13, die zumindest an ihrer Oberfläche elektrisch leitfähig sind, insbesondere entweder nur mit einer Schale bzw. Umhüllung oder aber durchgängig elektrisch leitfähig sind, erfolgt auf der linken Seite durch einen gebogenen Anschlusskontakt 18a. Dieser erstreckt sich über etwa 15% bis 20% des Umfangs des Heizbereichs 16, kann jedoch auch kürzer oder länger sein. Vom Anschlusskontakt 18a geht nach links eine Anschlussleitung 19a weg an eine hier nicht dargestellte Leistungsversorgung. Der Anschlusskontakt 18a ist so in die Umrandung 15 integriert oder mit dieser verbunden, dass sich die Umrandung 15 nicht zwischen dem Anschlusskontakt 18a und den Heizelementen 13 befindet. Alternativ kann der Anschlusskontakt 18a integraler Bestandteil der Umrandung 15 sein und sie so abschnittsweise sozusagen selber bilden.

An der rechten Seite ist ein weiterer Anschlusskontakt 18b dargestellt, der etwas anders ausgebildet ist. Er erstreckt sich über einen ähnlichen Bereich des Umfangs des Heizbereichs 16, ist allerdings nicht als exakt runder Bogen ausgebildet, sondern entlang einer Bogenform sozusagen wellig mit einer Wellung entsprechend der Reihe der an ihm anliegenden Heizelementen 13. So kann ein elektrischer Kontakt des Anschlusskontakts 18b an diese Heizelemente 13 eine größere Berührfläche aufweisen als bei dem linken Anschlusskontakt 18a. Damit kann erreicht werden, dass eine Stromdichte über bzw. durch die sich berührenden Oberflächen geringer ist. Somit kann hier zwar möglicherweise nur eine geringere Heizleistung erzeugt werden, unter Umständen kann damit aber die Lebensdauer der gesamten Heizeinrichtung 11 erhöht werden. Von dem Anschlusskontakt 18b geht nach rechts eine Anschlussleitung 19b ab.

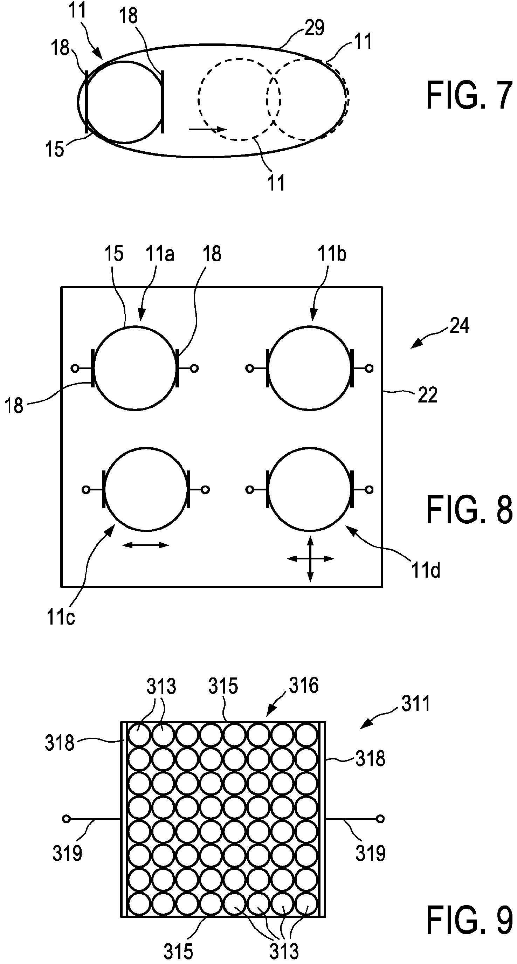

In der Fig. 2 ist eine Seitenansicht der Heizeinrichtung 11 aus Fig. 1 dargestellt, bei der die Heizelemente 13 sphärische Körper sind, hier abgerundet bzw. sogar möglichst exakt kugelförmig. Die Heizelemente 13 liegen sämtlich auf einem flachen Träger 22 auf, der elektrisch isolierend und vorteilhaft thermisch dämmend ist. Hier sind sämtliche Heizelemente 13 dargestellt, sodass auch zu erkennen ist, wie sie tatsächlich vom linken Anschlusskontakt 18 bis zum rechten Anschlusskontakt 18 angeordnet sind. Aus der Draufsicht der Fig. 1 ist zu erkennen, dass Strompfade zwischen den Anschlusskontakten 18 möglicherweise unterschiedlich lang sind. Dies stört aber den Heizbetrieb an sich nicht. Es ist auch leicht vorstellbar, dass die Grundform rechteckig oder quadratisch ist, wie nachher in Fig. 9 verdeutlicht ist. Dann können sämtlich gleich lange Strompfade zwischen den Anschlusskontakten bereitgestellt werden, bzw. die kürzestmöglichen Strompfade sind jeweils gleich.

In der Fig. 3 ist eine Abwandlung der Heizeinrichtung 11 ähnlich Fig. 2 dargestellt, allerdings sind hier die Heizelemente 13' als zwar kreisrunde, aber flache Scheiben ausgebildet. Auch diese Scheiben 13' verlaufen von dem linken Anschlusskontakt 18' bis zum rechten Anschlusskontakt 18' und füllen somit die Fläche auf dem Träger 22' zwischen der hier nicht dargestellten Umrandung 15 vollständig. Außerhalb dieser Umrandung 15 verläuft ein Dämmrand 27' zur thermischen Dämmung der Heizeinrichtung 11' zur Seite hin. Der Dämmrand 27' kann möglicherweise auch die Umrandung 15 bilden. Er besteht vorteilhaft aus einem Material, wie es auch bei an sich in Kochfeldern bekannten Strahlungsheizkörpern verwendet wird.

Während sich die kugelförmigen Heizelemente 13 der Fig. 2 im Wesentlichen punktförmig berühren, kann für die scheibenförmigen Heizelemente 13' der Fig. 3 vorgesehen sein, dass sie sozusagen linienförmige Berührbereiche miteinander bilden. So kann eine Kontaktoberfläche, durch die ein Strompfad fließt, vergrößert werden. Dies muss bei der Dimensionierung sowie der Heizleistung berücksichtigt werden, was aber möglich ist. Soll dies vermieden werden, so könnten die scheibenförmigen Heizelemente 13' bei relativ flacher Ausgestaltung gleichzeitig etwas faßförmig bzw. tonneauförmig nach außen gewölbt sein entlang des Außenumfangs. Dann wären die Berührbereiche wiederum nur punktförmig wie bei den kugelförmigen Heizelementen 13.

Aus der Fig. 3 ist außerdem zu erkennen, wie eine erfindungsgemäße Heizeinrichtung 11' in ein erfindungsgemäßes Kochfeld 24 eingebaut sein kann. Ähnlich den vorgenannten Strahlungsheizeinrichtungen liegt die Heizeinrichtung 11' mit dem umlaufenden Dämmrand 27' bzw. dessen Oberseite an einer Unterseite einer Kochfeldplatte 25 an. Somit ist der Abstand zwischen der Heizeinrichtung 11' bzw. den Heizelementen 13' und einem Boden eines über der Heizeinrichtung 11' aufgestellten Kochgefäßes relativ gering für eine möglichst gute Heizwirkung. In dem Kochfeld 24 können mehrere dieser Heizeinrichtungen 11' angeordnet sein, wie später in der Fig. 8 noch dargestellt ist.

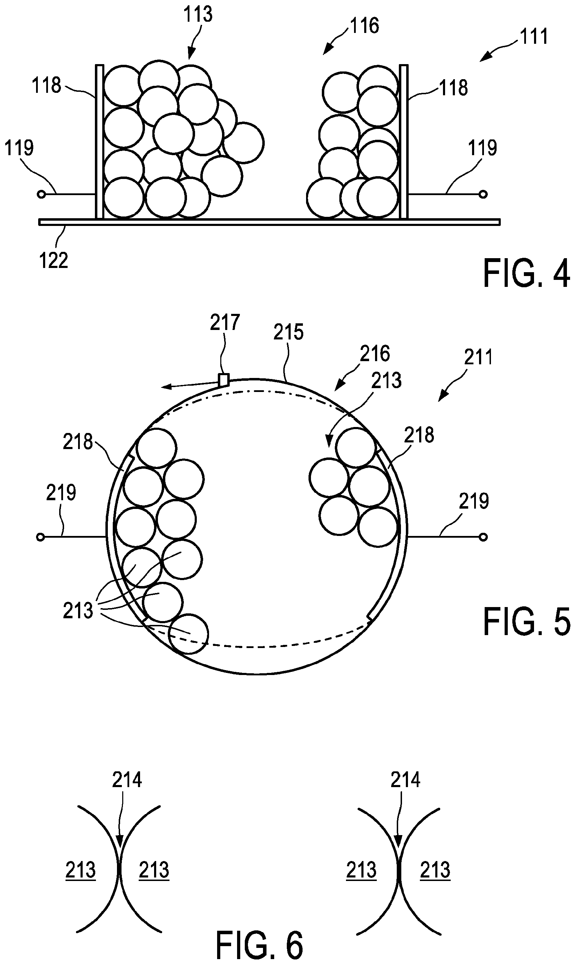

In der Fig. 4 ist eine weitere erfindungsgemäße Heizeinrichtung 111 von der Seite dargestellt ähnlich wie in Fig. 2. Dabei sind kugelförmige Heizelemente 113 aber nicht in einer Ebene bzw. in einer Lage oder Schicht angeordnet, sondern sozusagen in mehreren Schichten übereinander bzw. als eine Art Haufen. Es ist zu erkennen, dass hier etwa vier Lagen von Heizelementen 113 übereinander vorgesehen sind, da die Höhe der Menge von Heizelementen 113', die im Mittelbereich der Übersichtlichkeit halber wiederum nicht dargestellt sind, in etwa der Höhe von vier solchen Heizelementen 113 übereinander entspricht.

Die Heizelemente 113 befinden sich sozusagen in einem Volumen oder in einem Heizbereich 116 der nach unten gebildet ist von einem Träger 122. Eine wandartige Umrandung verläuft um die Heizelemente 113 herum, entweder in Draufsicht mit kreisrunder Form entsprechend Fig. 1 oder mit rechteckiger Form entsprechend Fig. 9. Sie bildet die seitlichen Begrenzungen des Volumens oder Heizbereichs. Links und rechts sind Anschlusskontakte 118 vorgesehen mit davon weggehenden Anschlussleitungen 119 für einen Anschluss an eine Leistungsversorgung oder Betriebsspannung.

Die Heizelemente 113 können in dem so gebildeten Heizbereich 116 quasi lose geschüttet vorliegen, alternativ können sie auch mit Druck gegeneinander verprasst sein. Dadurch können die Größe der Berührflächen und somit auch der jeweilige Stromfluss und eine jeweils erzeugte Heizleistung unterschiedlich eingestellt werden.

In der Fig. 5 ist eine nochmals weitere erfindungsgemäße Heizeinrichtung 211 ähnlich Fig. 1 dargestellt. Eine Umrandung 215, die mit Heizelementen 213 gefüllt ist und so einen Heizbereich 216 bildet, ist hier aber formveränderlich bzw. eine Wand oder Begrenzung verläuft durch einen Antrieb 217, der an dem linken freien Ende angeordnet ist. Hier kann der Heizbereich 216 durch eine gezahnte Fläche entlang der Umrandung 215 und eine entsprechende Ausgestaltung des Antriebs 217 odgl. sozusagen verengt oder ausgeweitet werden nach Art einer größenveränderlichen Schlinge. Dabei sind Anschlusskontakte 218 an die Heizelemente 213, von denen wiederum Anschlussleitungen 219 abgehen, vorteilhaft innerhalb der Umrandung 215 angeordnet oder bilden einen integralen Bestandteil dessen.

Im oberen Bereich ist dargestellt, wie sich die Form des Heizbereichs 216 bei leichter Verringerung in eine hier gestrichelt dargestellte Form ändert. Sind die Anschlusskontakte 218 starr ausgebildet, behalten sie ihre runde Teilkreisform, und die Umrandung 215 samt Heizbereich 216 darüber flach sich etwas ab. Alternativ können sich die Anschlusskontakte 218 auch etwas zusammenbiegen, also sozusagen ihre Krümmung vergrößern.

Im unteren Bereich ist gestrichelt dargestellt, wie sich die Form der Umrandung 215 und somit auch des Heizbereichs 216 ändert, wenn er stärker zusammengezogen worden ist. Hier ist schon eine deutliche Verringerung erkennbar. Dies bedeutet dann, dass der Druck auf die Heizelemente 213 deutlich größer geworden ist. Daraus resultiert eine in Fig. 6 in Vergrößerung dargestellte Veränderung von Berührflächen 214, die zwischen zwei Heizelementen 213 gebildet ist.

Links in Fig. 6 ist dargestellt, wie zwei Heizelemente 213, seien sie nun kugelförmig oder in Draufsicht runde Scheiben, bei leichtem Druck eine im wesentlichen punktförmige Berührfläche 214 zwischen sich bilden. Liegt ein Durchmesser der Heizelemente 213 bei etwa 10 mm, so kann die Berührfläche 214 sehr klein sein und beispielsweise weitgehend rund sein mit einem Durchmesser von 10 µm bis 20 µm.

Werden die Heizelemente 213 mit mehr Druck gegeneinander verpresst, wie in Fig. 6 rechts dargestellt ist, so deformieren sich zum einen, werden also etwas flachgedrückt. Zum anderen wird, abhängig von den Eigenschaften des Materials, aus denen sie bzw. ihre Oberfläche bestehen, die Berührfläche 214 vergrößert. Sie kann dann in etwa zweimal so groß bis zehnmal so groß werden wie die Berührfläche 214 links in Fig. 6, was erkennbar erhebliche Auswirkungen auf den Stromdurchfluss und somit auch die erreichte Heizwirkung hätte. Eine solche Veränderung der Berührflächen 214 kann vor einem Heizbetrieb der Heizeinrichtung 211 eingestellt werden, möglicherweise aber auch erst während des Heizbetriebs, um die Heizleistung zu variieren.

In der Fig. 7 ist eine Draufsicht auf eine erfindungsgemäße Heizeinrichtung 11 dargestellt mit vereinfachtem kreisrundem Heizbereich, erreicht durch eine kreisrunde Umrandung 15. Links und rechts sind gerade dargestellte Anschlusskontakte 18 vorgesehen. Diese Heizeinrichtung 11 ist unterhalb eines länglich ovalen Bräters 29 angeordnet bei einem Kochfeld entsprechend Fig. 3. Es ist zu ersehen, dass die Heizeinrichtung 11 nur in etwa ein Drittel der Länge und auch der Fläche des Bräters 29 abdeckt, wobei diese Fläche optimal wäre für eine Größe einer Beheizung des Bräters 29. Um nun aber auch eine vollständige und möglichst gleichmäßige Beheizung des Bräters 29 nur mit dieser einzigen und eigentlich zu kleinen Heizeinrichtung 11 zu erreichen, kann sie bewegbar ausgebildet sein. Gestrichelt dargestellt sind zwei mögliche Positionen der Heizeinrichtung 11 unter dem Bräter 29. Die Heizeinrichtung 11 kann entweder diese diskreten Positionen direkt anfahren und dann für eine bestimmte Zeit dort heizen, beispielsweise für 1 sec bis 30 sec.

Alternativ kann sie kontinuierlich hin und her fahren unter dem Bräter 29 zur Beheizung. Dabei kann entweder die gesamte Heizerrichtung 11 mitsamt einem Träger 22, auf dem die Heizelementen 13 aufliegen, bewegt werden. Alternativ kann auf einem großen Träger 22 eine Bewegung nur der Heizelementen 13 samt Umrandung 15 und Anschlusskontakten 18 erfolgen.

In der Fig. 8 ist eine Draufsicht auf ein Kochfeld 24 dargestellt, das hier einen großen durchgehenden Träger 22 aufweist. Auf diesem Träger 22 sind vier Heizeinrichtungen 11a bis 11d angeordnet, ähnlich wie es von einem klassischen Kochfeld mit vier Kochstellen bekannt ist. Jede der Heizeinrichtungen 11 kann dabei eine eigene Kochstelle bilden.

Sämtliche Heizeinrichtungen 11 sind eigentlich auch identisch ausgebildet. Sie weisen eine kreisrunde Umrandung 15 mit links und rechts angeordneten Anschlusskontakten 18 auf. Innerhalb der Umrandung 15 befinden sich hier nicht dargestellte Heizelemente. Die beiden hinteren Heizeinrichtungen 11a und 11b sind fest angeordnet bzw. unbeweglich. Die vordere linke Heizeinrichtung 11c kann, wie der Pfeil andeutet, nach links und nach rechts verschoben werden, entweder um ein größeres aufgesetztes Kochgefäß insgesamt dennoch beheizen zu können oder um exakt unter ein etwas dezentriert aufgestelltes Kochgefäß zu fahren. Für eine solche noch besser angepasste Beheizung ist die rechte vordere Heizeinrichtung 11d in alle Richtungen bewegbar, wie durch die überkreuzten Pfeile verdeutlicht wird. Für eine Bewegung können, ähnlich wie schon zu Fig. 7 dargestellt, ein nicht näher dargestellter Aktor oder Bewegungsmittel verwendet werden. Diese sind in vielfältiger Form aus dem Stand der Technik bekannt.

In der Fig. 9 ist eine Abwandlung einer nochmals weiteren Heizeinrichtung 311 dargestellt. Sie weist eine Umrandung 315 auf, die sozusagen nur oben und unten zwischen zwei links und rechts fest angeordneten Anschlusskontakten 318 samt Anschlussleitungen 319 verläuft. Somit soll dieser Heizbereich 316 fix sein. Der Heizbereich 316 ist erkennbar rechteckig ausgebildet und vollständig mit runden Heizelementen 313 gefüllt. Sie können gemäß der Fig. 1 bis 3 entweder kugelrund sein oder in Draufsicht runde Scheiben sein. Es ist zu erkennen, dass die Heizelemente 313 sämtlich maximal dicht gepackt sind im Heizbereich 316, sodass auch eine regelmäßige Anordnung vorliegt. Dadurch ergeben sich Strompfade zwischen den Anschlusskontakten 318, die eigentlich weitgehend in der kürzesten Richtung von Anschlusskontakt zu Anschlusskontakt verlaufen. Sozusagen schräge Strompfade ergeben sich im Betrieb kaum, da diese länger wären und somit aufgrund des höheren Widerstands kaum oder gar nicht stromdurchflossen sind. Somit ist es möglich, eine maximal gleichmäßige Heizwirkung entsprechend einem maximal gleichen bzw. gleichverteilten Stromfluss zu bewirken.

## Patentansprüche

1. Elektrische Heizeinrichtung (11, 11', 111, 211, 311) mit:
- mindestens drei Heizelementen (13, 13', 113, 213, 313), die vereinzelbar bzw. separat ausgebildet sind aber gemeinsam angeordnet sind, wobei die Heizelemente (13, 13', 113, 213, 313) aus elektrisch leitfähigem Material mit einer elektrisch leitfähigen Oberfläche und mit einer Temperaturbeständigkeit größer als 200°C bestehen,
- mindestens einem Heizbereich (16, 116, 216, 316), in dem die Heizelemente (13, 13', 113, 213, 313) derart angeordnet sind, dass sie einander berühren,
- mindestens zwei Anschlusskontakten (18, 18', 118, 218, 318) zum elektrischen Anschluss der Heizelemente (13, 13', 113, 213, 313) an eine Leistungsversorgung,
wobei:
- an jedem Anschlusskontakt (18, 18', 118, 218, 318) mindestens ein Heizelement (13, 13', 113, 213, 313) anliegt,
- die Anschlusskontakte (18, 18', 118, 218, 318) im Heizbereich (16, 116, 216, 316) oder am Rand (15, 215, 315) des Heizbereichs (16, 116, 216, 316) angeordnet sind,
- die Heizelemente (13, 13', 113, 213, 313) mindestens eine elektrisch leitfähige Verbindung zwischen den Anschlusskontakten (18, 18', 118, 218, 318) bilden,
- die Heizelemente (13, 13', 113, 213, 313) bei an den Anschlusskontakten (18, 18', 118, 218, 318) angelegter Spannung mit Stromfluss durch die Heizelemente (13, 13', 113, 213, 313) hindurch eine Heizwirkung aufweisen zumindest an einem Berührbereich zu einem Anschlusskontakt (18, 18', 118, 218, 318) oder zu einem anderen Heizelement (13, 13', 113, 213, 313),
**dadurch gekennzeichnet, dass**
- der Heizbereich (16, 116, 216, 316) mit Begrenzungen versehen ist, wobei mindestens eine Begrenzung bewegbar ist in eine Richtung in den Heizbereich (16, 116, 216, 316) hinein zum verstärkten Zusammendrücken der Heizelemente (13, 13', 113, 213, 313) im Heizbereich (16, 116, 216, 316),
- alle Heizelemente (13, 13', 113, 213, 313) der Heizeinrichtung (11, 11', 111, 211, 311) identisch sind,
- ein maximaler Durchmesser der Heizelemente (13, 13', 113, 213, 313) 3 mm bis 20 mm beträgt.

2. Heizeinrichtung nach Anspruch 1, **dadurch gekennzeichnet, dass** die Heizelemente (13') scheibenförmig sind, wobei vorzugsweise ein maximaler Durchmesser der Heizelemente (13') 2mal bis 10mal so groß ist wie ihre Dicke, wobei sie insbesondere runde Scheiben sind oder mehreckige Scheiben mit mindestens fünf Ecken sind.

3. Heizeinrichtung nach Anspruch 1, **dadurch gekennzeichnet, dass** die Heizelemente (13, 113) sphärische Körper sind, vorzugsweise runde Körper sind, insbesondere kugelrunde Körper sind.

4. Heizeinrichtung nach einem der vorhergehenden Ansprüche, **dadurch gekennzeichnet, dass** ein maximaler Durchmesser der Heizelemente (13, 13', 113, 213, 313) 4 mm bis 10 mm beträgt.

5. Heizeinrichtung nach einem der vorhergehenden Ansprüche, **dadurch gekennzeichnet, dass** die Heizelemente (13, 13', 113, 213, 313) einen elastischen bzw. formveränderlichen Kern im Inneren aufweisen, der von einer elektrisch leitfähigen Hülle umgeben ist, wobei vorzugsweise die Hülle mindestens 1 mm dick ist.

6. Heizeinrichtung nach einem der vorhergehenden Ansprüche, **dadurch gekennzeichnet, dass** die Heizelemente (13, 113, 213, 313) in mehreren Ebenen übereinander im Heizbereich (16, 116, 216, 316) angeordnet sind, wobei vorzugsweise mehr Heizelemente (13, 113, 213, 313) in Richtung von einem Anschlusskontakt (18, 118, 218, 318) zu einem anderen Anschlusskontakt (18, 118, 218, 318) hin angeordnet sind als in einer Richtung senkrecht zu den Ebenen.

7. Heizeinrichtung nach einem der vorhergehenden Ansprüche, **dadurch gekennzeichnet, dass** die Heizelemente (13, 13', 113, 213, 313) bei an den Anschlusskontakten (18, 18', 118, 218, 318) angelegter Spannung mit Stromfluss durch die Heizelemente (13, 13', 113, 213, 313) hindurch eine Heizwirkung aufweisen an ihrer gesamten Oberfläche.

8. Heizeinrichtung nach einem der vorhergehenden Ansprüche, **dadurch gekennzeichnet, dass** mindestens eine Begrenzung elastisch oder formveränderlich ausgebildet ist, wobei vorzugsweise mindestens so viele Begrenzungen starr ausgebildet sind wie Begrenzungen elastisch oder formveränderlich ausgebildet sind.

9. Heizeinrichtung nach einem der vorhergehenden Ansprüche, **dadurch gekennzeichnet, dass** die Anschlusskontakte (318) plan oder gerade ausgebildet sind, wobei vorzugsweise ein Anschlusskontakt (318) flächig ausgebildet ist und zumindest teilweise eine Begrenzung nach Anspruch 8 bildet, insbesondere eine gesamte Begrenzungswand an einer Seite des Heizbereichs (316) bildet.

10. Heizeinrichtung nach einem der Ansprüche 1 bis 8, **dadurch gekennzeichnet, dass** mindestens ein Anschlusskontakt (18, 18', 118, 218) gewölbt oder sphärisch ist, vorzugsweise gewölbt oder sphärisch mit einer Form entsprechend der Form der Heizelemente (13, 13', 113, 213).

11. Kochfeld mit einer Kochfeldplatte (25) und mit mindestens einer unterhalb der Kochfeldplatte (25) angeordneten Heizeinrichtung (11, 11', 111, 211, 311) nach einem der vorhergehenden Ansprüche, **dadurch gekennzeichnet, dass** die Heizeinrichtung (11, 11', 111, 211, 311) in dem Kochfeld (24) unterhalb der Kochfeldplatte (25) bewegbar angeordnet ist um einen bewegbaren Heizbereich (16, 116, 216, 316) zu bilden.

12. Kochfeld nach Anspruch 11, **dadurch gekennzeichnet, dass** der Heizbereich (16, 116, 216, 316) mit den Heizelementen (13, 13', 113, 213, 313) darin bewegbar ist durch Bewegen von Begrenzungen nach Anspruch 8 um den Heizbereich (16, 116, 216, 316) bzw. um die Heizelemente (13, 13', 113, 213, 313) herum.

13. Verfahren zum Betrieb einer Heizeinrichtung (11, 11', 111, 211, 311) nach einem der vorhergehenden Ansprüche,
**dadurch gekennzeichnet, dass** der Heizbereich (16, 116, 216, 316) mit den Heizelementen (13, 13', 113, 213, 313) darin verkleinert wird durch Zusammendrücken von Begrenzungen des Heizbereichs (16, 116, 216, 316), wobei dadurch die Berührflächen (214) zwischen den Heizelementen (13, 13', 113, 213, 313) mehr werden und/oder vergrößert werden, wodurch bei konstanter angelegter Spannung der Stromfluss in der Heizeinrichtung (11, 11', 111, 211, 311) bzw. durch die Heizelemente (13, 13', 113, 213, 313) und somit auch die erzeugte Heizleistung größer werden.

14. Verfahren nach Anspruch 13, **dadurch gekennzeichnet, dass** die Heizeinrichtung (11, 11', 111, 211, 311) in einem Kochfeld (24) nach Anspruch 11 oder 12 unterhalb der Kochfeldplatte (25) bewegt wird durch Bewegen der Begrenzungen, wobei vorzugsweise der Heizbereich (16, 116, 216, 316) bewegbar ist durch Bewegen von Begrenzungen um den Heizbereich (16, 116, 216, 316) herum mit den Heizelementen (13, 13', 113, 213, 313) darin, wobei insbesondere ein Aufstellort eines Kochgefässes (29) auf der Kochfeldplatte (25) ermittelt wird und dann mindestens eine Heizeinrichtung (11, 11', 111, 211, 311) unter den Aufstellort bewegt wird zur Beheizung des Kochgefässes (29).

## Claims

1. Electrical heating device (11, 11', 111, 211, 311) with:
- at least three heating elements (13, 13', 113, 213, 313), which can be separated or are formed separately but are arranged together, the heating elements (13, 13', 113, 213, 313) consisting of electrically conductive material with an electrically conductive surface and with a temperature resistance greater than 200°C,
- at least one heating region (16, 116, 216, 316) in which the heating elements (13, 13', 113, 213, 313) are arranged in such a way that they touch each other,
- at least two connection contacts (18, 18', 118, 218, 318) for the electrical connection of the heating elements (13, 13', 113, 213, 313) to a power supply,
wherein:
- at least one heating element (13, 13', 113, 213, 313) is connected to each connection contact (18, 18', 118, 218, 318),
- the connection contacts (18, 18', 118, 218, 318) are arranged in the heating region (16, 116, 216, 316) or at the border (15, 215, 315) of the heating region (16, 116, 216, 316),
- the heating elements (13, 13', 113, 213, 313) form at least one electrically conductive connection between the connection contacts (18, 18', 118, 218, 318),
- the heating elements (13, 13', 113, 213, 313) exhibit a heating effect at least at a contact area to a connection contact (18, 18', 118, 218, 318) or to another heating element (13, 13', 113, 213, 313) when a voltage is applied to the connection contacts (18, 18', 118, 218, 318) with current flowing through the heating elements (13, 13', 113, 213, 313),
**characterised in that**
- the heating region (16, 116, 216, 316) is provided with boundaries, at least one boundary being movable in a direction into the heating region (16, 116, 216, 316) for increased compression of the heating elements (13, 13', 113, 213, 313) in the heating region (16, 116, 216, 316),
- all heating elements (13, 13', 113, 213, 313) of the heating device (11, 11', 111, 211, 311) are identical,
- a maximum diameter of the heating elements (13, 13', 113, 213, 313) is 3 mm to 20 mm.

2. Heating device according to claim 1, **characterised in that** the heating elements (13') are disc-shaped, wherein preferably a maximum diameter of the heating elements (13') is 2 times to 10 times as large as their thickness, wherein they are in particular round discs or polygonal discs with at least five corners.

3. Heating device according to claim 1, **characterised in that** the heating elements (13, 113) are spherical bodies, preferably round bodies, in particular spherical bodies.

4. Heating device according to one of the preceding claims, **characterised in that** a maximum diameter of the heating elements (13, 13', 113, 213, 313) is 4 mm to 10 mm.

5. Heating device according to one of the preceding claims, **characterised in that** the heating elements (13, 13', 113, 213, 313) have an elastic or shape-changing core in the interior, which is surrounded by an electrically conductive sheath, the sheath preferably being at least 1 mm thick.

6. Heating device according to one of the preceding claims, **characterised in that** the heating elements (13, 113, 213, 313) are arranged in several planes one above the other in the heating region (16, 116, 216, 316), preferably more heating elements (13, 113, 213, 313) being arranged in the direction from one connection contact (18, 118, 218, 318) to another connection contact (18, 118, 218, 318) than in a direction perpendicular to the planes.

7. Heating device according to one of the preceding claims, **characterised in that** the heating elements (13, 13', 113, 213, 313) have a heating effect on their entire surface when voltage is applied to the connection contacts (18, 18', 118, 218, 318) with current flowing through the heating elements (13, 13', 113, 213, 313).

8. Heating device according to one of the preceding claims, **characterised in that** at least one boundary is elastic or of variable shape, preferably at least as many boundaries are rigid as boundaries are elastic or of variable shape.

9. Heating device according to one of the preceding claims, **characterised in that** the connection contacts (318) are flat or straight, wherein preferably one connection contact (318) is flat and at least partially forms a boundary according to claim 8, in particular forms an entire boundary wall on one side of the heating region (316).

10. Heating device according to one of claims 1 to 8, **characterised in that** at least one connection contact (18, 18', 118, 218) is curved or spherical, preferably curved or spherical with a shape corresponding to the shape of the heating elements (13, 13', 113, 213).

11. Cooking hob with a hob plate (25) and with at least one heating device (11, 11', 111, 211, 311) arranged below the hob plate (25) according to one of the preceding claims, **characterised in that** the heating device (11, 11', 111, 211, 311) is movably arranged in the hob (24) below the hob plate (25) in order to form a movable heating region (16, 116, 216, 316).

12. Cooking hob according to claim 11, **characterised in that** the heating region (16, 116, 216, 316) with the heating elements (13, 13', 113, 213, 313) therein is movable by moving boundaries according to claim 8 around the heating region (16, 116, 216, 316) or around the heating elements (13, 13', 113, 213, 313).

13. Method for operating a heating device (11, 11', 111, 211, 311) according to one of the preceding claims,
**characterised in that** the heating region (16, 116, 216, 316) with the heating elements (13, 13', 113, 213, 313) therein is reduced in size by compressing boundaries of the heating region (16, 116, 216, 316), whereby the contact surfaces (214) between the heating elements (13, 13', 113, 213, 313) are thereby increased and/or enlarged, as a result of which the current flow in the heating device (11, 11', 111, 211, 311) or through the heating elements (13, 13', 113, 213, 313) is reduced at a constant applied voltage. through the heating elements (13, 13', 113, 213, 313) and thus also the heating power generated increases.

14. Method according to claim 13, **characterised in that** the heating device (11, 11', 111, 211, 311) in a cooking zone (24) according to claim 11 or 12 is moved below the hob plate (25) by moving the boundaries, the heating zone (16, 116, 216, 316) preferably being movable by moving boundaries around the heating zone (16, 116, 216, 316), 116, 216, 316) with the heating elements (13, 13', 113, 213, 313) therein, wherein in particular an installation location of a cooking vessel (29) on the hob plate (25) is determined and then at least one heating device (11, 11', 111, 211, 311) is moved under the installation location for heating the cooking vessel (29).

## Revendications

1. Dispositif de chauffage électrique (11, 11', 111, 211, 311) avec:
- au moins trois éléments chauffants (13, 13', 113, 213, 313) qui peuvent être séparés ou qui sont conçus séparément mais qui sont disposés ensemble, les éléments chauffants (13, 13', 113, 213, 313) étant constitués d'un matériau électriquement conducteur avec une surface électriquement conductrice et avec une résistance à la température supérieure à 200°C,
- au moins une zone de chauffage (16, 116, 216, 316) dans laquelle les éléments chauffants (13, 13', 113, 213, 313) sont disposés de telle sorte qu'ils se touchent,
- au moins deux contacts de raccordement (18, 18', 118, 218, 318) pour le raccordement électrique des éléments chauffants (13, 13', 113, 213, 313) à une alimentation en puissance,
dans lequel :
- au moins un élément chauffant (13, 13', 113, 213, 313) est appliqué à chaque contact de raccordement (18, 18', 118, 218, 318),
- les contacts de raccordement (18, 18', 118, 218, 318) sont disposés dans la zone de chauffage (16, 116, 216, 316) ou sur le bord (15, 215, 315) de la zone de chauffage (16, 116, 216, 316),
- les éléments chauffants (13, 13', 113, 213, 313) forment au moins une liaison électriquement conductrice entre les contacts de raccordement (18, 18', 118, 218, 318),
- les éléments chauffants (13, 13', 113, 213, 313) présentent un effet de chauffage dans le cas d'une tension appliquée aux contacts de raccordement (18, 18', 118, 218, 318) avec un flux de courant à travers les éléments chauffants (13, 13', 113, 213, 313) au moins sur une zone de contact avec un contact de raccordement (18, 18', 118, 218, 318) ou avec un autre élément chauffant (13, 13', 113, 213, 313),
**caractérisé en ce que**
- la zone de chauffage (16, 116, 216, 316) est pourvue de limites, au moins une limite étant mobile dans une direction vers l'intérieur de la zone de chauffage (16, 116, 216, 316) pour augmenter la compression des éléments chauffants (13, 13', 113, 213, 313) dans la zone de chauffage (16, 116, 216, 316),
- tous les éléments chauffants (13, 13', 113, 213, 313) du dispositif de chauffage (11, 11', 111, 211, 311) sont identiques,
- un diamètre maximal des éléments chauffants (13, 13', 113, 213, 313) est compris entre 3 mm et 20 mm.

2. Dispositif de chauffage selon la revendication 1, **caractérisé en ce que** les éléments chauffants (13') sont en forme de disque, de préférence un diamètre maximal des éléments chauffants (13') étant de 2 fois à 10 fois leur épaisseur, notamment en étant des disques ronds ou des disques polygonaux avec au moins cinq coins.

3. Dispositif de chauffage selon la revendication 1, **caractérisé en ce que** les éléments chauffants (13, 113) sont des corps sphériques, de préférence des corps ronds, en particulier des corps sphériques.

4. Dispositif de chauffage selon l'une des revendications précédentes, **caractérisé en ce que** le diamètre maximal des éléments chauffants (13, 13', 113, 213, 313) est de 4 mm à 10 mm.

5. Dispositif de chauffage selon l'une des revendications précédentes, **caractérisé en ce que** les éléments chauffants (13, 13', 113, 213, 313) présentent un noyau élastique ou à forme variable à l'intérieur, qui est entouré d'une gaine électriquement conductrice, la gaine ayant de préférence une épaisseur d'au moins 1 mm.

6. Dispositif de chauffage selon l'une des revendications précédentes, **caractérisé en ce que** les éléments chauffants (13, 113, 213, 313) sont disposés dans plusieurs plans les uns au-dessus des autres dans la zone de chauffage (16, 116, 216, 316), de préférence plus d'éléments chauffants (13, 113, 213, 313) étant disposés dans la direction allant d'un contact de raccordement (18, 118, 218, 318) vers un autre contact de raccordement (18, 118, 218, 318) que dans une direction perpendiculaire aux plans.

7. Dispositif de chauffage selon l'une des revendications précédentes, **caractérisé en ce que** les éléments chauffants (13, 13', 113, 213, 313) présentent un effet de chauffage sur toute leur surface lorsqu'une tension est appliquée aux contacts de raccordement (18, 18', 118, 218, 318) avec un courant traversant les éléments chauffants (13, 13', 113, 213, 313).

8. Dispositif de chauffage selon l'une des revendications précédentes, **caractérisé en ce qu'**au moins une délimitation est élastique ou de forme variable, de préférence au moins autant de délimitations sont rigides que de délimitations sont élastiques ou de forme variable.

9. Dispositif de chauffage selon l'une des revendications précédentes, **caractérisé en ce que** les contacts de raccordement (318) sont plans ou droits, un contact de raccordement (318) étant de préférence plat et formant au moins partiellement une limitation selon la revendication 8, en particulier formant une paroi de limitation complète sur un côté de la zone de chauffage (316).

10. Dispositif de chauffage selon l'une des revendications 1 à 8, **caractérisé en ce qu'**au moins un contact de raccordement (18, 18', 118, 218) est bombé ou sphérique, de préférence bombé ou sphérique avec une forme correspondant à la forme des éléments chauffants (13, 13', 113, 213).

11. Table de cuisson avec une plaque de cuisson (25) et avec au moins un dispositif de chauffage (11, 11', 111, 211, 311) disposé sous la plaque de cuisson (25) selon l'une des revendications précédentes, **caractérisée en ce que** le dispositif de chauffage (11, 11', 111, 211, 311) est disposé de manière mobile dans la table de cuisson (24) sous la plaque de cuisson (25) pour former une zone de chauffage mobile (16, 116, 216, 316).

12. Table de cuisson selon la revendication 11, **caractérisée en ce que** la zone de chauffage (16, 116, 216, 316) avec les éléments chauffants (13, 13', 113, 213, 313) à l'intérieur est mobile en déplaçant les limites selon la revendication 8 autour de la zone de chauffage (16, 116, 216, 316) et autour des éléments chauffants (13, 13', 113, 213, 313), respectivement.

13. Procédé de fonctionnement d'un dispositif de chauffage (11, 11', 111, 211, 311) selon l'une des revendications précédentes,
**caractérisé en ce que** la zone de chauffage (16, 116, 216, 316) avec les éléments chauffants (13, 13', 113, 213, 313) dans celle-ci est réduite en comprimant les limites de la zone de chauffage (16, 116, 216, 316), les surfaces de contact (214) entre les éléments chauffants (13, 13', 113, 213, 313) devenant ainsi plus nombreuses et/ou étant agrandies, ce qui permet, à tension appliquée constante, d'augmenter le flux de courant dans le dispositif de chauffage (11, 11', 111, 211, 311) ou dans les éléments chauffants (13, 13', 113, 213, 313). à travers les éléments chauffants (13, 13', 113, 213, 313) et donc aussi la puissance de chauffage générée.

14. Procédé selon la revendication 13, **caractérisé en ce que** le dispositif de chauffage (11, 11', 111, 211, 311) dans une table de cuisson (24) selon la revendication 11 ou 12 est déplacé sous la plaque de cuisson (25) en déplaçant les limites, de préférence la zone de chauffage (16, 116, 216, 316) étant mobile en déplaçant les limites autour de la zone de chauffage (16, 116, 216, 316), 116, 216, 316) avec les éléments chauffants (13, 13', 113, 213, 313) à l'intérieur, dans lequel en particulier un emplacement d'un récipient de cuisson (29) sur la plaque de cuisson (25) est déterminé et ensuite au moins un dispositif de chauffage (11, 11', 111, 211, 311) est déplacé sous l'emplacement pour chauffer le récipient de cuisson (29).
